(19) Europäisches Patentamt
European Patent Office
Office européen des brevets

(11) Veröffentlichungsnummer : **0 387 587 B1**

# (12) EUROPÄISCHE PATENTSCHRIFT

(45) Veröffentlichungstag der Patentschrift : **03.02.93 Patentblatt 93/05**

(51) Int. Cl.$^5$ : **C08F 220/12**

(21) Anmeldenummer : **90103739.0**

(22) Anmeldetag : **26.02.90**

## (54) Silicium enthaltende Polymerisate, die hauptsächlich aus Acrylsäure- und/oder Methacrylsäureestern aufgebaut sind.

(30) Priorität : **11.03.89 DE 3907990**

(43) Veröffentlichungstag der Anmeldung : **19.09.90 Patentblatt 90/38**

(45) Bekanntmachung des Hinweises auf die Patenterteilung : **03.02.93 Patentblatt 93/05**

(84) Benannte Vertragsstaaten : **BE DE ES FR GB IT SE**

(56) Entgegenhaltungen : **DE-A- 1 570 814**

(73) Patentinhaber : **BASF Aktiengesellschaft**
**Carl-Bosch-Strasse 38**
**W-6700 Ludwigshafen (DE)**

(72) Erfinder : **Filges, Ulrich, Dr.**
**Albert-Einstein-Allee 33**
**W-6703 Limburgerhof (DE)**
Erfinder : **Aydin, Oral, Dr.**
**Sophienstrasse 14**
**W-6800 Mannheim 1 (DE)**
Erfinder : **Otterbach, Andreas, Dr.**
**Knietschstrasse 13**
**W-6710 Frankenthal (DE)**
Erfinder : **Auchter, Gerhard, Dr.**
**Paray-le-Monial-Strasse 10**
**W-6702 Bad Duerkheim (DE)**

EP 0 387 587 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft Silicium enthaltende Polymerisate, bestehend aus

a) 65 bis 99,95 Gew.-Teilen wenigstens eines Acrylsäure- und/oder Methacrylsäureesters eines 1 bis 12 C-Atome enthaltenden aliphatischen Alkohols (Monomere A),

b) 0 bis 30 Gew.-Teilen eines oder mehrerer radikalisch copolymerisierbarer ethylenisch ungesättigten Monomeren (Monomere B),

c) 0,05 bis 10 Gew.-Teilen wenigstens eines Anhydrids einer 4 bis 10 C-Atome enthaltenden $\alpha,\beta$-monoethylenisch ungesättigten Dicarbonsäure (Monomere C) oder 0,1 bis 10 Gew.-Teilen wenigstens eines wenigstens eine Isocyanatgruppe enthaltenden radikalisch copolymerisierbaren Monomeren (Monomere D) und

d) wirksamen Mengen wenigstens eines Silans der allgemeinen Formel I

$$NH_2 - R^1 - Si(R^2)_{3-m}(R^3)_m \qquad (I)$$

in der die Variablen folgende Bedeutung haben:

m 0, 1 oder 2,

$R^1$ Kohlenwasserstoffkette mit bis zu 10 C-Atomen, die durch Sauerstoff oder Stickstoff unterbrochen sein kann,

$R^2$ gleiche oder verschiedene hydrolysierbare Gruppen,

$R^3$ gleiche oder verschiedene $C_1$- bis $C_5$-Alkylgruppen.

Weiterhin betrifft die Erfindung die Herstellung dieser Silicium enthaltenden Polymerisate und ihre Verwendung in durch Luftfeuchtigkeit härtenden Dichtungsmassen.

Aus der EP-A 199 445 sind Silicium enthaltende Polymerisate bekannt, die im wesentlichen aus Acrylsäureestern aufgebaut und durch eine Kondensationsreaktion zwischen Polyacrylaten als Ausgangspolymeren und Verbindungen der allgemeinen Formel I erhältlich sind. Diese im wesentlichen aus Acrylsäureestern aufgebauten Silicium enthaltenden Polymerisate werden als Basis von unter Einwirkung von Luftfeuchtigkeit härtenden Dichtungsmassen empfohlen. Die anwendungstechnischen Eigenschaften dieser im wesentlichen aus Acrylsäureestern aufgebauten Silicium enthaltenden Polymerisate lassen jedoch zu wünschen übrig, da sie unter Einwirkung von Luftfeuchtigkeit, insbesondere bei Raumtemperatur, nur relativ langsam aushärten.

Der vorliegenden Erfindung lag daher die Aufgabe zugrunde, dem geschilderten Nachteil mittels besser geeigneten Polymerisaten auf der Basis von Acrylsäure- und/oder Methacrylsäureestern abzuhelfen. Demgemäß wurden die eingangs definierten Polymerisate gefunden.

Als Monomere A werden mit Vorteil Ester der Acrylsäure oder Methacrylsäure einpolymerisiert, die sich von 1 bis 8 C-Atomen enthaltenden Alkoholen wie Methanol, Ethanol, iso-Propanol, n- und iso-Butanol, n-Pentanol, n-Hexanol sowie 2-Ethylhexanol ableiten, wobei die Ester der Acrylsäure bevorzugt sind. Besonders bevorzugte Acrylate A sind Ethylacrylat, n-Butylacrylat, n-Hexylacrylat und 2-Ethylhexylacrylat. Aus der Reihe der Methacrylate ist das Methylmethacrylat von besonderem Interesse.

Während der Einbau von Monomeren A in die erfindungsgemäßen Polymerisate obligatorisch ist, bilden die Monomeren B lediglich Hilfsmonomere, die man in der Regel dann mitverwenden wird, wenn eine bestimmte Härte der Polymerisate erwünscht ist. Mögliche Monomere B sind z.B. Acryl- und Methacrylnitril, Vinylester von $C_2$- bis $C_{12}$-n-Alkansäuren wie Vinylacetat und Vinylpropionat sowie vinylaromatische Monomere wie Styrol, Vinyltoluol, Chlorstyrol oder tert.-Butylstyrol, wobei Acryl- und Methacrylnitril sowie Styrol bevorzugt sind.

Mit Vorteil werden die Gew.-Teile der Monomeren A, B mit Hilfe der Beziehung von Fox so gewählt, daß ein nur aus diesen Monomeren aufgebautes Polymerisat eine Glastemperatur von -70 bis +15, bevorzugt von -50 bis -20°C aufweisen würde. Nach Fox (T.G. Fox, Bull. Am. Phys. Soc. [Ser. II], 1, 123 [1956]) gilt für die Glastemperatur von Mischolymerisaten in guter Näherung:

$$\frac{1}{Tg} = \frac{x^1}{Tg^1} + \frac{x^2}{Tg^2} + \ldots\ldots \frac{x^n}{Tg^n}$$

wobei $x^1, x^2, \ldots, x^n$ die Massenbrüche der Monomeren 1, 2, ..., n und $Tg^1, Tg^2, \ldots, Tg^n$ die Glastemperaturen der jeweils nur aus einem der Monomeren 1, 2, ... oder n aufgebauten Polymeren in Grad Kelvin bedeuten. Die Glastemperaturen dieser Homopolymerisate der Monomeren A und B sind bekannt und z.B. in J. Brandrup, E.H. Immergut, Polymer Handbook 1st Ed. J. Wiley, New York, 1966 und 2nd Ed. J. Wiley, New York, 1975 aufgeführt.

Als Monomere C, die gegenüber den Monomeren D bevorzugt sind, werden mit Vorteil cyclische Anhydride zweibasischer Säuren wie Maleinsäureanhydrid, Itaconsäureanhydrid oder Citraconsäureanhydrid eingesetzt, wobei die Verwendung von Maleinsäureanhydrid besonders vorteilhaft ist.

Als Monomere D kommen beispielsweise $\omega$-Isocyanatoalkylacrylate und -methacrylate der allgemeinen Formel II

$$CH_2 = \underset{\substack{|\\ R^4}}{C} - \overset{\substack{O\\ \|}}{C} - O - R^5 - N = C = O \qquad II$$

in der die Variablen folgende Bedeutung haben:

$R^4$ Wasserstoff oder die Methylgruppe,

$R^5$ Kohlenwasserstoffkette mit bis zu 12 C-Atomen, die einfach oder mehrfach durch Sauerstoff unterbrochen sein kann

in Betracht, die u.a. in der DE-A 35 23 692 beschrieben sind. Weitere mögliche Monomere D sind N-(1-alkenyl)isocyanate mit 2 bis 4 Kohlenstoffatomen in der Alkenylgruppe, sowie das 1-(4-Isopropenyl-phenyl)-1-methyl-ethylisocyanat und das Addukt aus Bis[isocyanat]-carbodiimid und Acrylsäure. Die beiden letzteren Monomeren sind u.a. in "Methoden der organischen Chemie (Houben-Weyl)", E20, S. 1573 bis 1575, Georg Thieme Verlag, Stuttgart (1987) beschrieben. Bevorzugte Monomere D sind das Vinylisocyanat, der 2-Methyl-acrylsäure-(2-isocyanat-ethylester), der 2-Methyl-acrylsäure-(5-isocyanat-3-oxa-pentylester) sowie der Acrylsäure-(1,2-dimethyl-3-isocyanat-propylester).

Halogene, die Aminogruppe oder wenige C-Atome tragende Alkyloxy-, Alkylthio-, Alkylamino- oder Dialkylaminogruppen zählen zu den bevorzugten hydrolysierbaren Gruppen $R^2$. Bevorzugt eingesetzte Silane I sind solche mit $m = 0$, wie 3-Aminopropyl-trimethoxysilan, 3-Aminopropyl-triethoxysilan und N-(2-Aminoethyl-3-Aminopropyl)-trimethoxysilan.

Der Gehalt der erfindungsgemäßen Polymerisate an Silanen I ist abhängig vom Gehalt an Monomeren C oder D. Enthalten die erfindungsgemäßen Polymerisate 0,05 bis 0,5 Gew.-Teile Monomere C oder D, so beläuft sich der Gehalt an Silanen I auf solche Mengen, daß der Quotient Q, gebildet aus der Molzahl der eingebauten Silane I als Zähler und der Molzahl der eingebauten Monomeren C oder der in Form der Monomeren D eingebauten Isocyanatgruppen als Nenner 0,75 bis 1,0, bevorzugt 0,85 bis 1,0 beträgt. Enthalten die erfindungsgemäßen Polymerisate 0,5 bis 3 (3 bis 10) Gew.-Teile der Monomeren C oder D, so beträgt Q 0,01 bis 1 (0,005 bis 1), wobei Verhältnisse Q von 0,1 bis 1,0 (0,02 bis 0,5) bevorzugt sind.

Die Herstellung der erfindungsgemäßen Polymerisate erfolgt zweckmäßigerweise so, daß man aus den Monomeren A bis D nach dem an sich bekannten Verfahren der radikalischen Lösungspolymerisation ein Ausgangspolymeres herstellt und in dessen Lösung oder Schmelze die Silane I üblicherweise innerhalb weniger Minuten einrührt, wobei die Temperatur von untergeordneter Bedeutung ist und 25 bis 200°C betragen kann. Als Lösungsmittel für die radikalische Lösungspolymerisation werden in der Regel Ether wie Tetrahydrofuran oder Dioxan, Ester wie Ethylacetat oder n-Butylacetat, Ketone wie Aceton und Cyclohexanon, N,N-Dialkylcarbonsäureamide wie N,N-Dimethylformamid, N,N-Dimethylacetamid oder N-Methyl-2-pyrrolidon, Aromaten wie Toluol und Xylol, aliphatische Kohlenwasserstoffe wie Isooctan, chlorierte Kohlenwasserstoffe wie tert.-Butylchlorid oder Weichmacher wie Di-n-butylphthalat verwendet.

Als Radikalstarter kommen insbesondere organische Azoverbindungen oder organische Peroxide wie Azo-bis-(isobutyronitril), Dibenzoylperoxid oder tert.-Butylperbenzoat in Betracht.

Als weitere Hilfsmittel können u.a. kettenübertrangende Substanzen wie aliphatische, aromatische oder alicyclische Mercaptane, z.B. n-Butylmercaptan oder n-Laurylmercaptan oder Thioglycolsäurealkylester wie Thioglycolsäureethlyester zugesetzt werden. Besonders bevorzugte Molekulargewichstregler sind Mercaptoalkoxysilane. Die Polymerisationstemperatur beträgt in vorteilhafter Weise 70 bis 120°C. Üblicherweise wird die Polymerisation in Form eines Zulaufverfahrens durchgeführt, bei dem man einen Teil des Polymerisationsansatzes vorlegt, auf die Polymerisationstemperatur erhitzt und anschließend unter Aufrechthaltung der Polymerisationstemperatur den Rest des Polymerisationsansatzes in getrennten Zuläufen, von denen einer die Monomeren enthält, kontinuierlich zuführt. Das Zulaufverfahren erstreckt sich in der Regel über einen Zeitraum von 2 bis 24 h. Abschließend wird üblicherweise noch 1 bis 2 h nachpolymerisiert. Zweckmäßigerweise arbeitet man in "wasserfreiem" Polymerisationsmedium, d.h. bei einem Wassergehalt von weniger als 100 ppm. Mit Vorteil wird die Lösungspolymerisation der an sich wasserfreien Reaktionsteilnehmer in Gegenwart geringer Mengen an Trocknungsmitteln wie Tetraalkoxysilanen, z.B. Tetramethoxysilan, oder Orthoameisensäuretrialkylestern, z.B. Triethylorthoformiat, gegebenenfalls unter Zusatz einer Lewis Säure, durchgeführt. Von den so erhältlichen Lösungen der Ausgangspolymeren kann das Lösungsmittel je nach Bedarf, beispielsweise durch Destillation im Vakuum, teilweise oder vollständig abgetrennt werden. Der K-Wert der dabei anfallenden Ausgangspolymeren in Tetrahydrofuran (THF) beträgt vorzugsweise 8 bis 100, besonders bevorzugt 15 bis 60. Der K-Wert ist eine relative Vikositätszahl, die in Analogie zur DIN 53 726 bei 25°C bestimmt wird. Er enthält die Fließgeschwindigkeit einer Mischung aus 0,01 g Polymerem pro mol THF, relativ zur Fließgeschwindigkeit von reinem THF und charakterisiert den mittleren Polymerisationsgrad des Polymeren.

Durch Einrühren der Silane I in Schmelzen oder Lösungen der Ausgangspolymeren sind die erfindungsgemäßen Polymerisate in Substanz oder in Lösung erhältlich, wobei die Umsetzung im allgemeinen bereits bei Raum temperatur innerhalb weniger Minuten erfolgt. Die erfindungsgemäßen Polymerisate sind durch Einwirkung von Luftfeuchtigkeit bei Zimmertemperatur relativ rasch härtbar und somit sowohl in Lösung als auch in Substanz zur Herstellung von an der Luftfeuchtigkeit härtenden Dichtungsmassen geeignet. Dabei können als Hilfsmittel u.a. äußere Weichmacher, inerte Füllstoffe, Verdickungsmittel, Farbstoffe, Lösungsmittel, Mittel zur Erhöhung der Alterungsbeständigkeit oder Wirkstoffe, die die Aushärtung durch Einwirkung von Luftfeuchtigkeit beschleunigen, zugegeben werden. Die Mengen an Zusatzstoffen sind dem Fachmann geläufig und werden in Abhängigkeit von den gewünschten Eigenschaften der besonderen Masse ausgewählt und zweckmäßigerweise in die Lösungen oder Schmelzen der erfindungsgemäßen Polymerisate eingerührt. Bezogen auf das Gesamtgewicht der Zubereitung beträgt der Anteil der erfindungsgemäßen Silicium enthaltenden Polymerisate in der Regel 30 bis 100, bevorzugt 50 bis 100 Gew.-%, während der Anteil der inerten Füllstoffe 0 bis 50 Gew.-% beträgt.

Geeignete äußere Weichmacher sind beispielsweise Phthalsäureester wie Diethylphthalat, Di-n-butylphthalat, Di-isoheptylphthalat oder Di-(2-ethylhexyl)-phthalat, Adipinsäureester wie Di-2-ethylhexyladipat oder Di-iso-octyladipat, Sebacinsäureester wie Di-(2-ethylhexyl)-sebacinat, Phosphorsäureester wie Tri-n-butylphosphat, Tri-isobutyl-phosphat oder Tri-(ß-chlorethyl)-phosphat sowie chlorierte Kohlenwasserstoffe.

Als inerte Füllstoffe kommen insbesondere Aluminiumsilicate, Quarz, gefällte oder pyrogene Kieselsäure, die hydrophobiert sein kann, Leichtund Schwerspat, Talcum, Dolomit, Calciumcarbonat sowie farbgebende Pigmente wie Titanweiß, Bleiweiß, Chromgelb, Mennige, Zinkgelb oder Ruß in Betracht.

Die erfindungsgemäßen Polymerisate sind durch eine bereits bei Zimmertemperatur unter Einwirkung von Luftfeuchtigkeit rasch fortschreitende Aushärtung charakterisiert, die je nach Bedarf durch Zugabe entsprechender Wirkstoffe wie Tetra-n-butyl-titanat, Di-n-butyl-zinn-di-n-dodecanat oder Di-n-butyl-zinn-di-acetat zusätzlich beschleunigt werden kann.

Die Dichtungsmassen können in Form eines Einkomponentensystems hergestellt werden, bei dem alle Bestandteile vermischt und anschließend in einem abgedichteten Behälter gelagert werden. Man kann sie aber auch in Form eines Zweikomponentensystems verwenden, bei dem das Ausgangspolymere und die Hilfsmittel zu einer Komponente vermischt werden, in die vor Anwendung die Silane I als zweite Komponente eingerührt werden. Im Falle eines Einkomponentensystems muß besonders sorgfältig auf den Ausschluß von Wasser geachtet werden, da sonst ein vorzeitiges Aushärten der Dichtungsmasse erfolgt. Im Falle eines Zweikomponentensystems ist die Anwesenheit geringer Spuren Wasser im Ausgangspolymeren oder in den Hilfsmitteln weniger kritisch, was sowohl die Verarbeitung der Ausgangskomponenten als auch die Lagerung der Dichtungsmasse erleichtert.

Beispiele B1 bis B14 und Vergleichsbeispiel V

Verschiedene Silicium enthaltende Polymerisate, die hauptsächlich aus Acrylsäure- und/oder Methacrylsäureestern aufgebaut sind

B1

Eine Lösung aus 300 g Toluol, 1 g Triethylorthoformiat und 50 g (510 mmol) Maleinsäureanhydrid wurde auf die Polymerisationstemperatur von 110°C erhitzt und anschließend unter Aufrechterhaltung der Polymerisationstemperatur im Laufe von 2,5 h mit 550 g n-Butylacrylat und parallel dazu im Laufe von 3,5 h mit einer Lösung von 2 g Azo-bis-(isobutyronitril) in 100g Toluol versetzt. Danach wurde noch 2 h bei 110°C nachpolymerisiert. Der K-Wert (in THF) des in Lösung erhaltenen Ausgangspolymeren betrug 32. In die erhaltene Lösung des Ausgangspolymeren wurden bei Zimmertemperatur innerhalb von 5 min 12 g (67 mmol) 3-Aminopropyl-trimethoxysilan eingerührt. Von der erhaltenen Flüssigkeit wurde eine Probe in 2 mm Schichtdicke auf eine Glasplatte aufgetragen und Normalklima (23°C, 50 % r.F.) ausgesetzt. Nach 24 h zeigte der gebildete Film kein Fließverhalten mehr.

B2

Wie B1, nur wurden an Stelle der 50 g Maleinsäureanhydrid 12 g (60 mmol) 2-Methyl-acrylsäure-(5-isocyanat-3-oxa-pentylester) einpolymerisiert. Der K-Wert (in THF) der Ausgangspolymeren betrug 36,5. Nach 70 h zeigte der gebildete Film kein Fließverhalten mehr.

V

Eine Lösung aus 300 g Toluol und 1 g Triethylorthoformiat wurde auf die Polymerisationstemperatur von 110°C erhitzt und anschließend unter Aufrechterhaltung der Polymerisationstemperatur im Laufe von 2,5 h mit 600 g n-Butylacrylat und parallel dazu im Laufe von 3,5 h mit einer Lösung von 2 g Azo-bis-(isobutyronitril) in 100 g Toluol versetzt. Danach wurde noch 24 h bei 110°C nachpolymerisiert. Der K-Wert (in THF) des in Lösung erhaltenen Ausgangspolymeren betrug 33,2. Die erhaltene Lösung des Ausgangspolymeren wurde mit 12 g 3-Aminopropyl-trimethoxysilan 4 h auf 140°C erhitzt. Danach wurde eine Probe der erhaltenen Flüssigkeit in 2 mm Schichtdicke auf eine Glasplatte aufgetragen und Normalklima ausgesetzt. Auch nach 96 h zeigte der gebildete Film immer noch Fließverhalten.

B3

Eine Lösung aus 300 g Toluol und 2 g Triethylorthoformiat wurde auf die Polymerisationstemperatur von 80°C erhitzt und anschließend innerhalb von 3 h mit einer Monomerenmischung aus 500 g n-Butylacrylat, 90 g Acrylnitril und 10 g (65 mmol) 2-Methyl-acrylsäure-(2-isocyanat-ethylester) und parallel dazu im Laufe von 3,5 h mit einer Lösung von 2 g Azo-bis-(isobutyronitril) in 100 g Toluol versetzt. Danach wurde noch 1,5 h bei 110°C nachpolymerisiert und anschließend 150 g Lösungsmittel im Vakuum abdestilliert. Dann wurden bei Zimmertemperatur in die ein Ausgangspolymerisat mit einem K-Wert (in THF) von 42,0 enthaltende Lösung 11,6 g (65 mmol) 3-Aminopropyl-trimethoxysilan eingerührt und eine Probe der erhaltenen Zubereitung in 2 mm Schichtdicke auf eine Glasplatte aufgetragen und 3 Wochen lang Normalklima ausgesetzt. Es wurde ein transparenter elastischer Film mit einer Reißfestigkeit von 0,37 $N/mm^2$ und einer Reißdehnung (beide nach DIN 53 504 bei einer Vorschubgeschwindigkeit von 100 mm/min und unter Verwendung des Probekörpers S3A) von 677 % erhalten.

B4

Wie B3, jedoch mit folgenden Unterschieden: Die Polymerisationstemperatur betrug 80°C, die Zusammensetzung der Monomerenmischung war 540 g Ethylacrylat, 50 g Acrylnitril und 10 g (65 mmol) 2-Methyl-acrylsäure-(2-isocyanat-ethylester), die Zufuhr der Monomerenmischung erfolgte innerhalb von 1 h 45 min, die Initiatorlösung enthielt 3 g Azo-bis-(isobutyronitril) und wurde parallel zur Monomerenmischung innerhalb von 2 h 30 min zugeführt, die Nachpolymerisation erfolgte bei 90°C, die abdestillierte Menge Lösungsmittel betrug 100 g, der K-Wert des Ausgangspolymeren (in THF) war 45,9 g, als Silan I wurden 14,3 g (65mmol) 3-Aminopropyl-triethoxysilan zugegeben, die Reißfestigkeit betrug 1,3 $N/mm^2$ und die Reißdehnung lag bei 146%.

B5

Wie B3, jedoch mit folgenden Unterschieden: Die Polymerisationstemperatur betrug 105°C, die Zusammensetzung der Monomerenmischung war 490 g Ethylacrylat, 100 g n-Butylmethacrylat und 12 g (77 mmol) 2-Methyl-acrylsäure-(2-isocyanat-ethylester), die Zufuhr der Monomerenmischung erfolgte innerhalb von 2 h, die Initiatorlösung enthielt 3 g Azo-bis-(isobutyronitril) und wurde parallel zur Monomerenmischung innerhalb von 2 h 15 min zugeführt, die Nachpolymerisation dauerte 2 h, die abdestillierte Menge Lösungsmittel betrug 100 g, der K-Wert des Ausgangspolymeren (in THF) war 36,4 g, als Silan I wurden 14,3 g (64 mmol) N-(2-Aminoethyl-3-aminopropyl)-trimethoxysilan zugegeben, die Reißfestigkeit betrug 0,36 $N/mm^2$ und die Reißdehnung lag bei 345 %.

B6

Wie B3, jedoch mit folgenden Unterschieden: Die Polymerisationstemperatur betrug 100°C, die Zusammensetzung der Monomerenmischung war 500 g n-Butylacrylat, 90 g Ethylacrylat und 15 g (75 mmol) 2-Methyl-acrylsäure-(5-isocyanat-3-oxa-pentylester), die Monomerenmischung enthielt zusätzlich 2 g Thioglycolsäureethylester, die Zufuhr der Monomerenmischung erfolgte innerhalb von 2,5 h, die Initiatorlösung enthielt 4 g Azo-bis-(isobutyronitril) und wurde parallel zur Monomerenmischung innerhalb von 3 h zugeführt, die Nachpolymerisation dauerte 1 h, das Lösungsmittel wurde vollständig abdestilliert, der K-Wert des Ausgangspolymeren (in THF) betrug 21,4, die zugegebene Menge 3-Aminopropyl-trimethoxysilan betrug 12 g (67 mmol) und wurde gemeinsam mit 2 g Di-n-butyl-zinn-di-n-dodecanat zugegeben, die Reißfestigkeit betrug 0,2 $N/mm^2$ und die Reißdehnung lag bei 98 %.

B7

Wie B3, jedoch mit folgenden Unterschieden: Die Polymerisationstemperatur betrug 100°C, die Zusammensetzung der Monomerenmischung war 590 g Ethylacrylat und 10 g (50 mmol) 2-Methyl-acrylsäure-(5-isocyanat-3-oxa-pentylester), die Zufuhr der Monomerenmischung erfolgte innerhalb von 2 h, die Initiatorlösung enthielt 4 g Azo-bis-(isobutyronitril) und wurde parallel zur Monomerenmischung innerhalb von 2 h 30 min zugeführt, die Nachpolymerisation dauerte 1 h, die abdestillierte Menge Lösungsmittel betrug 200 g, der K-Wert des Ausgangspolymeren (in THF) war 26,1, die zugegebene Menge 3-Aminopropyl-trimethoxysilan betrug 9 g (50 mmol) und wurde gemeinsam mit 30 g hydrophobierter pyrogener Kieselsäure sowie 2 g Di-n-butyl-zinn-di-n-dodecanat zugegeben, die Reißfestigkeit betrug 0,8 $N/mm^2$ und die Reißdehnung lag bei 110 %.

B8

Wie B3, jedoch mit folgenden Unterschieden: Die Polymerisationstemperatur betrug 100°C, die Zusammensetzung der Monomerenmischung war 490 g Ethylacrylat, 100 g Acrylnitril und 10 g (50 mmol) 2-Methyl-acrylsäure-(5-isocyanat-3-oxa-pentylester), die Zufuhr der Monomerenmischung erfolgte innerhalb von 2 h, die Initiatorlösung enthielt 4 g Azo-bis-(isobutyronitril) und wurde parallel zur Monomerenmischung innerhalb von 2 h 30 min zugeführt, die Nachpolymerisation dauerte 1 h, die abdestillierte Menge Lösungsmittel betrug 100 g, der K-Wert des Ausgangspolymeren (in THF) war 39,5, die zugegebene Menge 3-Aminopropyl-trimethoxysilan betrug 9 g (50 mmol), die Reißfestigkeit betrug 2,3 $N/mm^2$ und die Reißdehnung lag bei 550 %.

B9

Wie B3, jedoch mit folgenden Unterschieden: Die Polymerisationstemperatur betrug 110°C, die vorgelegte Lösung enthielt zusätzlich 10 g (102 mmol) Maleinsäureanhydrid, die Zusammensetzung der Monomerenmischung war 510 g Ethylacrylat, 60 g Methylmethacrylat und 20 g Styrol, die Nachpolymerisation erfolgte bei 130°C und dauerte 1 h, die abdestillierte Menge Lösungsmittel betrug 80 g, der K-Wert des Ausgangspolymeren (in THF) war 37,5, die zugegebene Menge 3-Aminopropyl-trimethoxysilan betrug 18,3 g (102 mmol), die Reißfestigkeit betrug 1,08 $N/mm^2$ und die Reißdehnung lag bei 575 %.

B10

Wie B3, jedoch mit folgenden Unterschieden: Die Polymerisationstemperatur betrug 110°C, die vorgelegte Lösung enthielt zusätzlich 10 g (102 mmol) Maleinsäureanhydrid, die Zusammensetzung der Monomerenmischung war 410 g Ethylacrylat, 160 g Methylmethacrylat und 20 g Styrol, die Nachpolymerisation erfolgte bei 130°C und dauerte 1 h, es wurde kein Lösungsmittel abdestilliert, der K-Wert des Ausgangspolymeren (in THF) war 34, die zugegebene Menge 3-Aminopropyl-trimethoxysilan betrug 10 g (56 mmol), die Reißfestigkeit betrug 1,52 $N/mm^2$ und die Reißdehnung lag bei 358 %.

B11

Wie B3, jedoch mit folgenden Unterschieden: Die Polymerisationstemperatur betrug 100°C, die Vorlage enthielt zusätzlich 20 g (204 mmol) Maleinsäureanhydrid, die Zusammensetzung der Monomerenmischung war 510 g n-Butylacrylat, 60 g Acrylnitril und 20 g Styrol, die Monomerenmischung enthielt zusätzlich 2 g Thioglycolsäureethylester, die Initiatorlösung wurde parallel zur Monomerenmischung innerhalb von 3 h zugeführt, die Nachpolymerisation erfolgte bei 100°C und dauerte 1 h, die abdestillierte Menge Lösungsmittel betrug 400 g, der K-Wert des Ausgangspolymeren (in THF) war 30,5, die zugegebene Menge 3-Aminopropyl-trimethoxysilan betrug 10 g (56 mmol), die Reißfestigkeit betrug 1,32 $N/mm^2$ und die Reißdehnung lag bei 363 %.

B12

Wie B3, jedoch mit folgenden Unterschieden: Die Polymerisationstemperatur betrug 100°C, die Vorlage enthielt zusätzlich 10 g (102 mmol) Maleinsäureanhydrid, die Monomerenmischung bestand nur aus 590 g Ethylacrylat und wurde innerhalb von 2 h zugegeben, die Initiatorlösung wurde parallel zur Monomerenmischung innerhalb von 2,5 h zugeführt, die Nachpolymerisation dauerte 1 h, die abdestillierte Menge Lösungsmittel betrug 120 g, der K-Wert des Ausgangspolymeren (in THF) war 28,4, als Silan I wurden 10 g (45 mmol) 3-Aminopropyl-triethoxysilan zugegeben, die Reißfestigkeit betrug 0,36 $N/mm^2$ und die Reißdehnung lag bei 347 %.

B13

Wie B3, jedoch mit folgenden Unterschieden: Die Polymerisationstemperatur betrug 90°C, die Vorlage enthielt zusätzlich 30 g (306 mmol) Maleinsäureanhydrid, die Zusammensetzung der Monomerenmischung war 510 g n-Butylacrylat, 60 g Acrylnitril und 20 g Styrol, die Zufuhr der Monomerenmischung erfolgte innerhalb von 2,5 h, die Initiatorlösung enthielt 4 g Azo-bis-(isobutyronitril) und wurde parallel zur Monomerenmischung innerhalb von 3 h zugeführt, die Nachpolymerisation dauerte 1 h, es wurde kein Lösungsmittel abdestilliert, der K-Wert der Ausgangspolymeren (in THF) war 36,1, als Silan I wurden 12 g (54 mmol) 3-Aminopropyltriethoxysilan gemeinsam mit 50 g hydrophobierter pyrogener Kieselsäure sowie 1 g Di-n-butyl-zinn-di-n-dodecanat zugegeben, die Reißfestigkeit betrug 1,1 $N/mm^2$ und die Reißdehnung lag bei 230 %.

B14

Wie B3, jedoch mit folgenden Unterschieden: Die Polymerisationstemperatur betrug 120°C, die Vorlage bestand aus 370 g Di-n-butylphthalat, 5 g Tetraethoxysilan und 20 g (204 mmol) Maleinsäureanhydrid, die Zusammensetzung der Monomerenmischung war 710 g Ethylacrylat und 180 g Methylmethacrylat, die Zufuhr der Monomerenmischung erfolgte innerhalb von 2,5 h, die Initiatorlösung bestand aus 5 g tert.-Butylperbenzoat sowie 30 g Di-n-butylphthalat und wurde parallel zur Monomerenmischung innerhalb von 3,0 h zugeführt, die Nachpolymerisation erfolgte bei 120°C und dauerte 1 h, es wurde kein Lösungsmittel abdestilliert, der K-Wert des Ausgangspolymeren (in THF) betrug 39, als Silan I wurden 14 g (63 mmol) 3-Aminopropyl-triethoxysilan zugegeben, die Reißfestigkeit betrug 0,1 $N/mm^2$ und die Reißdehnung lag bei 83 %.

## Patentansprüche

### Patentansprüche für folgende Vertragsstaaten : BE, DE, FR, GB, IT, SE

1. Silicium enthaltende Polymerisate, bestehend aus
   a) 65 bis 99,95 Gew.-Teilen wenigstens eines Acrylsäure- und/oder Methacrylsäureesters eines 1 bis 12 C-Atome enthaltenden aliphatischen Alkohols (Monomere A),
   b) 0 bis 30 Gew.-Teilen eines oder mehrerer radikalisch copolymerisierbarer ethylenisch ungesättigten Monomeren (Monomere B),
   c) 0,05 bis 10 Gew.-Teilen wenigstens eines Anhydrids einer 4 bis 10 C-Atome enthaltenden $\alpha,\beta$-monoethylenisch ungesättigten Dicarbonsäure (Monomere C) oder 0,1 bis 10 Gew.-Teilen wenigstens eines wenigstens eine Isocyanatgruppe enthaltenden radikalisch copolymerisierbaren Monomeren (Monomere D) und
   d) wirksamen Mengen wenigstens eines Silans der allgemeinen Formel I

   $$NH_2 - R^1 — Si(R^2)_{3-m}(R^3)_m \quad (I)$$

   in der die Variablen folgende Bedeutung haben:
   m 0, 1 oder 2,
   $R^1$ Kohlenwasserstoffkette mit bis zu 10 C-Atomen, die durch Sauerstoff oder Stickstoff unterbrochen sein kann,
   $R^2$ gleiche oder verschiedene hydrolysierbare Gruppen,
   $R^3$ gleiche oder verschiedene $C_1$- bis $C_5$-Alkylgruppen, sodaß Folgende Bedingung gibt :
   Enthalten die erfindungsgemäßen Polymerisate 0,05 bis 0,5 Gew.-Teile Monomere C oder D, so beläuft sich der Gehalt an Silanen I auf solche Mengen, daß der Quotient Q, gebildet aus der Molzahl der eingebauten Silane I als Zähler und der Molzahl der eingebauten Monomeren C oder der in Form der Monomeren D eingebauten Isocyanatgruppen als Nenner 0,75 bis 1,0 beträgt. Enthalten die erfindungsgemäßen Polymerisate 0,5 bis 3 (3 bis 10) Gew.-Teile der Monomeren C oder D, so beträgt Q 0,01 bis 1 (0,005 bis 1).

2. Verfahren zur Herstellung von Polymerisaten gemäß Anspruch 1, dadurch gekennzeichnet, daß man aus den Monomeren A bis D nach dem an sich bekannten Verfahren der radikalischen Lösungspolymerisation ein Ausgangspolymeres herstellt und in dessen Lösung oder Schmelze wirksame Mengen wenigstens eines Silans I einrührt.

3. Verwendung der Polymerisate gemäß Anspruch 1 in durch Einwirkung von Luftfeuchtigkeit härtenden Dichtungsmassen.

**Patentansprüche für folgenden Vertragsstaat: ES**

1. Verfahren zur Herstellung von Silicium enthaltenden Polymerisaten, dadurch gekennzeichnet, daß man aus einem Monomerengemisch aus
   a) 65 bis 99,95 Gew.-Teilen wenigstens eines Acrylsäure- und/oder Methacrylsäureesters eines 1 bis 12 C-Atome enthaltenden aliphatischen Alkohols (Monomere A),
   b) 0 bis 30 Gew.-Teilen eines oder mehrerer radikalisch copolymerisierbarer ethylenisch ungesättigten Monomeren (Monomere B), und
   c) 0,05 bis 10 Gew.-Teilen wenigstens eines Anhydrids einer 4 bis 10 C-Atome enthaltenden $\alpha,\beta$-monoethylenisch ungesättigten Dicarbonsäure (Monomere C) oder 0,1 bis 10 Gew.-Teilen wenigstens eines wenigstens eine Isocyanatgruppe enthaltenden radikalisch copolymerisierbaren Monomeren (Monomere D)
   durch radikalische Lösungspolymerisation ein Ausgangspolymeres herstellt und in dessen Lösung oder Schmelze wirksame Mengen wenigstens eines Silans der allgemeinen Formel I
   $$NH_2 - R^1 — Si(R^2)_{3-m}(R^3)_m \quad (I)$$
   in der die Variablen folgende Bedeutung haben:
   m 0, 1 oder 2,
   $R^1$ Kohlenwasserstoffkette mit bis zu 10 C-Atomen, die durch Sauerstoff oder Stickstoff unterbrochen sein kann,
   $R^2$ gleiche oder verschiedene hydrolysierbare Gruppen,
   $R^3$ gleiche oder verschiedene $C_1$- bis $C_5$-Alkylgruppen,
   einrührt, sodaß folgende Bedingung gibt :
   Enthalten die erfindungsgemäßen Polymerisate 0,05 bis 0,5 Gew.-Teile Monomere C oder D, so beläuft sich der Gehalt an Silanen I auf solche Mengen, daß der Quotient Q, gebildet aus der Molzahl der eingebauten Silane I als Zähler und der Molzahl der eingebauten Monomeren C oder der in Form der Monomeren D eingebauten Isocyanatgruppen als Nenner 0,75 bis 1,0 beträgt. Enthalten die erfindungsgemäßen Polymerisate 0,5 bis 3 (3 bis 10) Gew.-Teile der Monomeren C oder D, so beträgt Q 0,01 bis 1 (0,005 bis 1).

2. Verwendung der nach einem Verfahren gemäß Anspruch 1 hergestellten Polymerisate in durch Einwirkung von Luftfeuchtigkeit härtenden Dichtungsmassen.

**Claims**

**Claims for the following Contracting States : BE, DE, FR, GB, IT, SE**

1. A silicon-containing polymer consisting of
   a) from 65 to 99.95 parts by weight of one or more acrylates and/or methacrylates of an aliphatic alcohol of 1 to 12 carbon atoms (monomers A),
   b) from 0 to 30 parts by weight of one or more ethylenically unsaturated monomers capable of undergoing free radical copolymerization (monomers B),
   c) from 0.05 to 10 parts by weight of one or more anhydrides of an $\alpha,\beta$-monoethylenically unsaturated dicarboxylic acid of 4 to 10 carbon atoms (monomers C) or from 0.1 to 10 parts by weight of one or more monomers containing one or more isocyanate groups and capable of undergoing free radical copolymerization (monomers D) and
   d) effective amounts of one or more silanes of the general formula I
   $$NH_2 - R^1 — Si(R^2)_{3-m}(R^3)_m \quad (I)$$
   where m is 0, 1 or 2, $R^1$ is a hydrocarbon chain of not more than 10 carbon atoms which may be interrupted by oxygen or nitrogen, the radicals $R^2$are identical or different hydrolyzable groups and the radicals $R^3$ are identical or different $C_1$-$C_5$-alkyl groups,
   so that the following condition is applicable:
   if the novel polymers contain from 0.05 to 0.5 part by weight of monomers C or D, the content of silanes

I is such that the quotient Q, calculated from the number of moles of the incorporated silanes I as the numerator and the number of moles of the incorporated monomers C or of the isocyanate groups incorporated in the form of the monomers D as the denominator, is from 0.75 to 1.0; if the novel polymers contain from 0.5 to 3 (from 3 to 10) parts by weight of monomers C or D, Q is from 0.01 to 1 (from 0.005 to 1).

**2.** A process for the preparation of polymers as claimed in claim 1, wherein the starting polymer is prepared from the monomers A to D by conventional free radical solution polymerization, and effective amounts of one or more silanes I are stirred into its solution or melt.

**3.** Use of the polymers as claimed in claim 1 in sealing compounds curable by the action of atmospheric humidity.

**Claims for the following Contracting State : ES**

**1.** A process for preparing a silicon-containing polymer wherein the starting polymer is prepared from a monomer mixture of

a) from 65 to 99.95 parts by weight of one or more acrylates and/or methacrylates of an aliphatic alcohol of 1 to 12 carbon atoms (monomers A),

b) from 0 to 30 parts by weight of one or more ethylenically unsaturated monomers capable of undergoing free radical copolymerization (monomers B), and

c) from 0.05 to 10 parts by weight of one or more anhydrides of an $\alpha,\beta$-monoethylenically unsaturated dicarboxylic acid of 4 to 10 carbon atoms (monomers C) or from 0.1 to 10 parts by weight of one or more monomers containing one or more isocyanate groups and capable of undergoing free radical copolymerization (monomers D)

by free radical solution polymerization, and effective amounts of one or more silanes of the general formula I

$$NH_2 - R^1 — Si(R^2)_{3-m}(R^3)_m \qquad (I)$$

where m is 0, 1 or 2, $R^1$ is a hydrocarbon chain of not more than 10 carbon atoms which may be interrupted by oxygen or nitrogen, the radicals $R^2$ are identical or different hydrolyzable groups and the radicals $R^3$ are identical or different $C_1$-$C_5$-alkyl groups, are stirred into its solution or melt so that the following condition is applicable: if the novel polymers contain from 0.05 to 0. 5 part by weight of monomers C or D, the content of silanes I is such that the quotient Q, calculated from the number of moles of the incorporated silanes I as the numerator and the number of moles of the incorporated monomers C or of the isocyanate groups incorporated in the form of the monomers D as the denominator, is from 0.75 to 1.0; if the novel polymers contain from 0.5 to 3 (from 3 to 10) parts by weight of monomers C or D, Q is from 0.01 to 1 (from 0.005 to 1).

**2.** Use of a polymer prepared by a process as claimed in claim 1 in sealing compounds curable by the action of atmospheric humidity.

**Revendications**

**Revendications pour les Etats contractants suivants : BE, DE, FR, GB, IT, SE**

**1.** Polymères contenant du silicium, constitués

a) de 65 à 99,5 parties en poids d'au moins un ester de l'acide acrylique et/ou de l'acide méthacrylique d'un alcool aliphatique qui contient de 1 à 12 atomes de carbone (monomère A),

b) de 0 à 30 parties en poids d'un ou plusieurs monomères à insaturation éthylénique, copolymérisables par voie radicalaire (monomère B),

c) de 0,05 à 10 parties en poids d'au moins un anhydride d'un acide dicarboxylique alpha,bêta-monoéthyléniquement insaturé, contenant de 4 à 10 atomes de carbone (monomère C), ou de 0,1 à 10 parties en poids d'au moins un monomère copolymérisable par voie radicalaire, contenant au moins un radical isocyanate (monomère D) et

d) des proportions actives d'au moins un silane de la formule générale I

$$NH_2 - R^1 — Si(R^2)_{3-m}(R^3)_m \qquad (I)$$

dans laquelle

m est égal à 0, 1 ou 2,
$R^1$ représente une chaîne hydrocarbonée comportant jusqu'à 10 atomes de carbone, qui peut être interrompue par de l'oxygène ou de l'azote,
$R^2$ représente des radicaux hydrolysables, identiques ou différents,
$R^3$ représente des radicaux alkyle en $C_1$ à $C_5$, identiques ou différents,
en une manière telle que s'impose la condition suivante : les polymères conformes à la présente invention contiennent - ils 0,05 à 0,5 partie en poids de monomère C ou D, que la teneur en silanes I s'élève à des proportions telles que le quotient Q, formé à partir du nombre de moles des silanes I incorporés, pris en tant que numérateur et du nombre de moles des monomères C incorporés, ou des radicaux isocyanate incorporés sous forme des monomères D, pris en tant que dénominateur, varie de 0,75 à 1,0; les polymères conformes à l'invention contiennent - ils 0,5 à 3 (3 à 10) parties en poids des monomères C ou D, que Q varie de 0,01 à 1 (0,005 à 1).

2. Procédé de fabrication de polymères selon la revendication 1, caractérisé en ce que l'on prépare un polymère de départ ou initial à partir des monomères A à D selon le procédé de polymérisation en solution radicalaire en soi connu et on incorpore par agitation des proportions actives d'au moins un silane dans la masse fondue ou la solution du polymère de départ ou initial.

3. Utilisation de polymères suivant la revendication 1 dans des matières d'étanchéité durcissant sous l'action de l'humidité de l'air.

**Revendications pour l'Etat contractant suivant : ES**

1. Procédé de fabrication de polymères contenant du silicium, caractérisé en ce que, à partir d'un mélange de monomères constitué
a) de 65 à 99,5 parties en poids d'au moins un ester de l'acide acrylique et/ou de l'acide méthacrylique d'un alcool aliphatique qui contient de 1 à 12 atomes de carbone (monomère A),
b) de 0 à 30 parties en poids d'un ou plusieurs monomères à insaturation éthylénique, copolymérisables par voie radicalaire (monomère B),
c) de 0,05 à 10 parties en poids d'au moins un anhydride d'un acide dicarboxylique alpha,bêta-monoéthyléniquement insaturé, contenant de 4 à 10 atomes de carbone (monomère C), ou de 0,1 à 10 parties en poids d'au moins un monomère copolymérisable par voie radicalaire, contenant au moins un radical isocyanate (monomère D) et
on prépare par polymérisation en solution radicalaire, un polymère de départ ou initial et on incorpore sous agitation dans sa masse fondue ou sa solution, des proportions actives d'au moins un silane de la formule générale I

$$NH_2 - R^1 — Si(R^2)_{3-m}(R^3)_m \qquad (I)$$

dans laquelle
m est égal à 0, 1 ou 2,
$R^1$ représente une chaîne hydrocarbonée comportant jusqu'à 10 atomes de carbone, qui peut être interrompue par de l'oxygène ou de l'azote,
$R^2$ représente des radicaux hydrolysables, identiques ou différents,
$R^3$ représente des radicaux alkyle en $C_1$ à $C_5$, identiques ou différents,
en une manière telle que s'impose la condition suivante : les polymères conformes à la présente invention contiennent - ils 0,05 à 0,5 partie en poids de monomère C ou D, que la teneur en silanes I s'élève à des proportions telles que le quotient Q, formé à partir du nombre de moles des silanes I incorporés, pris en tant que numérateur et du nombre de moles des monomères C incorporés, ou des radicaux isocyanate incorporés sous forme des monomères D, pris en tant que dénominateur, varie de 0,75 à 1,0; les polymères conformes à l'invention contiennent - ils 0,5 à 3 (3 à 10) parties en poids des monomères C ou D, que Q varie de 0,01 à 1 (0,005 à 1).

2. Utilisation des polymères fabriqués par mise en oeuvre du procédé selon la revendication 1 dans des matières d'étanchéité qui durcissent sous l'action de l'humidité de l'air.